# EUROPÄISCHE PATENTSCHRIFT

(11) **EP 0 606 246 B1**
(45) Veröffentlichungstag und Bekanntmachung des Hinweises auf die Patenterteilung: **30.08.1995**
(21) Anmeldenummer: 92918643.5
(22) Anmeldetag: 03.09.1992
(51) Int. Cl.: B60T 8/36

(54) **ELEKTROHYDRAULISCHES AGGREGAT ZUR DRUCKREGELUNG IN BREMSANLAGEN VON FAHRZEUGEN**
ELECTRO-HYDRAULIC UNIT FOR REGULATING THE PRESSURE IN VEHICLE BRAKING SYSTEMS
UNITE ELECTROHYDRAULIQUE DE REGULATION DE LA PRESSION DANS DES SYSTEMES DE FREINAGE DE VEHICULES

(30) Priorität: 12.10.1991 DE 4133879
(43) Veröffentlichungstag der Anmeldung: 20.07.1994
(73) Patentinhaber: ROBERT BOSCH GMBH, 70442 Stuttgart (DE)
(72) Erfinder: SCHMITT, Edgar, D-7143 Vaihingen (DE); SIEGEL, Heinz, D-7000 Stuttgart 40 (DE); MERGENTHALER, Robert, D-7145 Markgroeningen (DE); DERINGER, Helmut, D-7000 Stuttgart 40 (DE)
(86) Internationale Anmeldenummer: DE9200738
(87) Internationale Veröffentlichungsnummer: WO9308050

(56) Entgegenhaltungen:
- EP-A- 0 373 551
- WO-A-91/10583
- DE-A- 3 701 019
- DE-C- 3 427 906
- US-A- 5 137 455

## Beschreibung

### Stand der Technik

Die Erfindung geht aus von einem elektrohydraulischen Aggregat zur Druckregelung in Bremsanlagen von Fahrzeugen, auch Hydroaggregat genannt, der im Oberbegriff des Anspruchs 1 definierten Gattung.

Bei einem bekannten elektrohydraulischen Aggregat dieser Art (EP 0 373 551 A2) trägt der kappen- oder haubenförmig ausgebildete Deckel zum Abdecken der Elektromagnete und Relais längs seiner einen Seitenfläche eine von außen zugängliche, langgestreckte erste Steckergruppe mit einer Vielzahl von eingelassenen Steckern. Auf der von dieser Steckergruppe abgekehrten Seite steht der haubenförmige Deckel über den Hydraulikblock vor und ist hier im Überstandsbereich mit einer an seiner Innenwand befestigten, langgestreckten zweiten Steckergruppe ausgestattet. Der zweiten Steckergruppe ist eine dritte Steckergruppe zugeordnet, die im Überstandsbereich des Deckels seitlich am Hydraulikblock befestigt und mit zu den Steckern der zweiten Steckergruppe komplementären Steckern bestückt ist. Wenn der haubenförmige Deckel auf den Hydraulikblock aufgesetzt wird, greift jeder der Stecker der zweiten Steckergruppe in einen Stecker der dritten Steckergruppe. Die letztgenannten Stecker sind mit den Elektromagneten der Fluidventile und mit den Relais, die in einem steckerfreien Teil der dritten Steckergruppe untergebracht und gesondert befestigt sind, fest verdrahtet.

Der haubenförmige Deckel ist auf dem Hydraulikblock aufgesetzt und mittels einer Ringdichtung gegen diesen abgedichtet. Ein Abflußkanal im Deckel oder im Hydraulikblock sorgt dafür, daß bei undichten Fluidventilen sich innerhalb des haubenförmigen Deckels kein Fluid, d.h. Bremsflüssigkeit, ansammeln kann. Der Deckel hat an seiner vom Überstandsbereich abgekehrten Seite ein Paar Scharnieransätze, die an je einem vom Hyraulikblock wegstehenden Zapfen eingerastet sind. Um diese dadurch definierte Schwenkachse wird der Deckel zum Öffnen und Schließen geschwenkt. Beim Schließen des Deckels kommen die Stecker der zweiten Steckergruppe an der Deckelunterseite automatisch in Kontakt mit den komplementären Steckern der dritten Steckergruppe, wodurch die elektrische Verbindung der Elektromagnetventile und Relais mit dem Motor und den Steckern der ersten Steckergruppe hergestellt ist.

Bei einem ebenfalls bekannten Ventilblock für eine hydraulische Bremsanlage (DE 37 01 019 A1) werden die am Ventilblock eingestemmten und mit ihrem elektrischen Teil vorstehenden Elektromagnetventile von einer Abdeckung überdeckt, die am Ventilblock schwenkbar gehalten ist. Die Abdeckung trägt eine langgestreckte Steckergruppe mit einer Mehrzahl von Steckern (Messerleiste). Die elektrische Verbindung der Elektromagnetventile mit den Steckern erfolgt mittels einer flexiblen Anschlußfolie, die sowohl mit den elektrischen Anschlüssen der Elektromagnetventile als auch mit den Enden der in Versteifungsrippen eingebetteten Stecker verlötet ist. Die Anschlußfolie ist dabei so bemessen, daß ihre Lage ein Kippen der Abdeckung um 90° bis 180° um die der Steckergruppe benachbarte Kante ermöglicht. Hierdurch wird der Lötvorgang wesentlich vereinfacht.

### Vorteile der Erfindung

Das erfindungsgemäße elektrohydraulische Aggregat wie im kennzeichnenden Teil des Anspruchs 1 angegeben hat den Vorteil einer fertigungsgerechten Konstruktion, die zudem äußerst montagefreundlich ist, also Montagezeit einsparen hilft. Durch die Trennung von Stecksockel und Haube können beide in relativ einfachen Fertigungsgängen hergestellt werden, wobei der Stecksockel einschließlich Stecker, Steckeranschlüsse und Relais-Steckkontakte komplett vorgefertigt wird. Zur Montage wird der Stecksockel im aufgeklappten Zustand an den Hydraulikblock angesetzt. Dann wird die zuvor mit den elektrischen Anschlüssen der Magnetventile verbundene Kontaktfolie an die Steckeranschlüsse im Hohlraumbereich der Abdeckkappe angelötet, wobei bei einem Klappwinkel von ca. 120° die Kontaktfolie sauber an den Steckeranschlüssen anliegt und bequem angelötet werden kann. Anschließend wird der Stecksockel durch Klappen auf den Hydraulikblock bündig und dicht gefügt. Die flexible Kontaktfolie rollt sich dabei an der Innenwand des Hohlraums ab und wird in eine definierte Winkellage gezwungen, in welcher das Entstehen von Scheuerstellen bei dem unvermeidlichen Schwingen des Aggregats im Einbauzustand sicher verhindert ist. Die Fixierung des Stecksockels auf dem Hydraulikblock erfolgt mittels einer zentralen Buchse, durch welche ein Stehbolzen hindurchgeführt und im Hydraulikblock verschraubt wird. Bevorzugt wird hierfür eine der am Hydraulikblock eingeschraubten Stehbolzen für die Aufhängung des elektrohydraulischen Aggregats im Fahrzeug verwendet.

Die beiden Relais für die Steuerung der Magnetventile und des Elektromotors sind platzsparend unterhalb der als Steckerleiste ausgebildeten Steckergruppe angeordnet. Ihre Montage erfolgt durch einfaches Einstecken in die Steckaufnahmen des Stecksockels, wobei gleichzeitig die elektrische Kontaktierung erfolgt. Die unterhalb der Steckerleiste abdichtend auf dem Stecksockel aufgesetzte Abdeckhaube gewährleistet neben ihrer Schutz- und Abdeckfunktion für die Relais einen zuverlässigen Halt der Relais in den Steckaufnahmen und verhindert damit Kontaktbeschädigungen und damit zum Ausfall führende Schwingungen der Relais in der Steckaufnahme. Durch eine in den Stecksockel eingeschraubte mittige Befestigungsschraube zur Befestigung der Abdeckhaube am Stecksockel läßt sich letztere leicht abnehmen und die Relais leicht demontieren, was durch seitlich außen rechts und links im Stecksockel vorgesehene Ausnehmungen, durch welche hindurch die Relais hintergriffen werden können, wesentlich unterstützt wird. Durch die Anordnung der Relais rechts und links der Hydraulikblockmitte, in welcher auch der eine Stehbolzen für die Geräteaufhängung liegt, wird Bauraum eingespart, so daß sich eine kompakte Baueinheit ohne überstehende Teile mit relativ kleiner Gesamtbaugröße ergibt.

Durch die in den weiteren Ansprüchen aufgeführten Maßnahmen sind vorteilhafte Weiterbildungen und Verbesserungen des im Anspruch 1 angegebenen elektrohydraulischen Aggregats möglich.

Gemäß einer bevorzugten Ausführungsform der Erfindung erfolgt die Kontaktierung der flexiblen Kontaktfolie zur elektrischen Verbindung der Magnetventile mit dem Magnetventil-Relais und den Steckern sowie die elektrische Verbindung des Elektromotors mit dem Elektromotor-Relais und den Steckern und die elektrische Verbindung zu den Steckbuchsen in den Steckaufnahmen der Relais durch ein fertigungstechnisch einfach herstellbares Stanzgitter, das bei der Fertigung des Kunststoff-Stecksockels mit umspritzt wird und damit fest in dem Stecksockel eingebettet ist. Der Masseanschluß wird mittels einer in den Hydraulikblock eingeschraubten Masseschraube bewerkstelligt, an der das Stanzgitter über eine Schlaufe angeschraubt wird.

Gemäß einer vorteilhaften Ausführungsform der Erfindung sind in der mit Leiterbahnen und Lötpunkten an den Leiterbahnenden versehenen flexiblen Kontaktfolie im Bereich der Leiterbahnenden Schlitze eingebracht, die einen gewissen Abstand von den Leiterbahnen einhalten und in Lochungen in der Kontakfolie münden. Dadurch können verschiedene Toleranzlagen der Anschlüsse der Elektromagnete für die Magnetventile ausgeglichen werden, die durch unterschiedliche hohe Lagen der Lötpins an den Elektromagneten nach toleranzbehaftetem Einbau auftreten. Die Lochungen an den Schlitzenden verhindern ein weiterreißen der Schlitze in der Folie.

In einer zweckmäßigen Ausführungsform der Erfindung weist die Kontaktfolie einen mittig angeordneten langgestreckten Schlitz auf, durch welche eine Anschlußlitze für den Elektromotor hindurchgeführt ist, die einerseits an einer vom Stanzgitter in den Hohlraum hineinragenden Anschlußfahne und andererseits an einer Kontaktbuchse für die Elektromotorkontaktierung angelötet oder angecrimpt ist. Die Kontaktbuchse ist bevorzugt an einem Kunststoff-Zwischenstecker gehalten, und zwar am Ende eines mit dem Zwischenstecker einstückigen, durch eine Bohrung im Hydraulikblock bis auf die den Elektromotor tragenden Seite hindurchgesteckten Rohres, das der Anschlußlitzenführung dient. Der Zwischenstecker ist mittels eines am Umfang des Rohres ausgebildeten Tannenbaumprofils nach Eindrücken des Rohres in der Bohrung veklemmt, so daß ein zusätzliches Niederhalten des Zwischensteckers durch andere Mittel entbehrlich ist.

Alle diese vorstehend beschriebenen Maßnahmen dienen insgesamt einer rationellen Fertigung und Montage des elektrohydraulischen Aggregats.

### Zeichnung

Die Erfindung ist anhand eines in der Zeichnung dargestellten Ausführungsbeispiels in der nachfolgenden Beschreibung näher erläutert. Es zeigen:
- Fig. 1: eine Draufsicht eines elektrohydraulischen Aggregats,
- Fig. 2: eine Seitenansicht des Aggregats in Fig. 1, teilweise geschnitten gemäß Linie II-II
- Fig. 3: eine Seitenansicht des Aggregats in Fig. 1, teilweise geschnitten gemäß Linie III-III und mit die Hydraulikanschlüsse abdeckenden Schutzkappen.
- Fig. 4: eine Ansicht des Aggregats gemäß Pfeilrichtung IV in Fig. 2 bei hochgeklapptem Stecksockel,
- Fig. 5: einen Schnitt längs der Linie V-V in Fig. 2,
- Fig. 6: eine Draufsicht des am Aggregat zu befestigenden Stecksockels,
- Fig. 7: einen Schnitt längs der Linie VII-VII in Fig. 6.

### Beschreibung des Ausführungsbeispiels

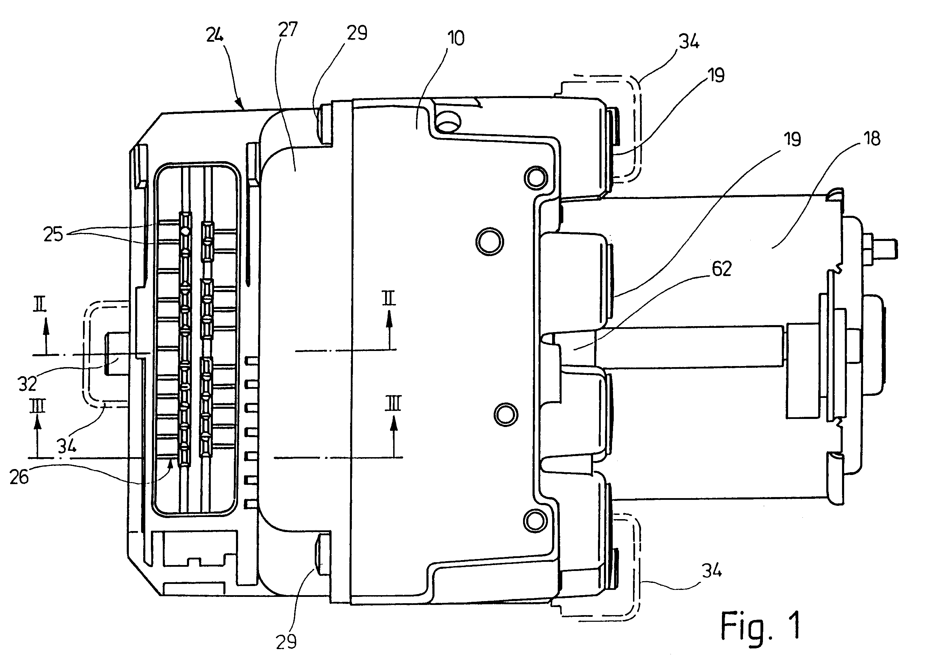

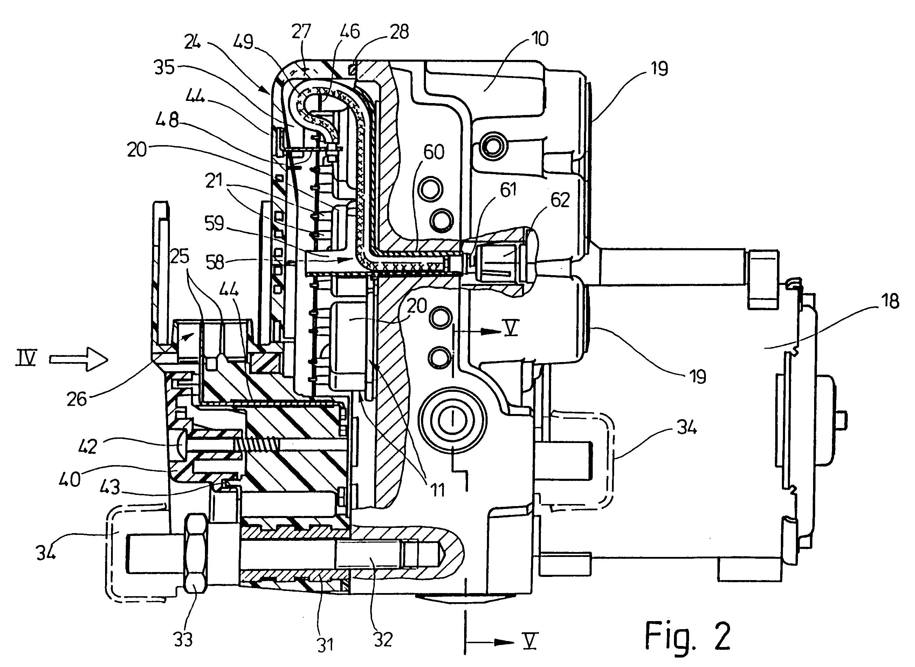

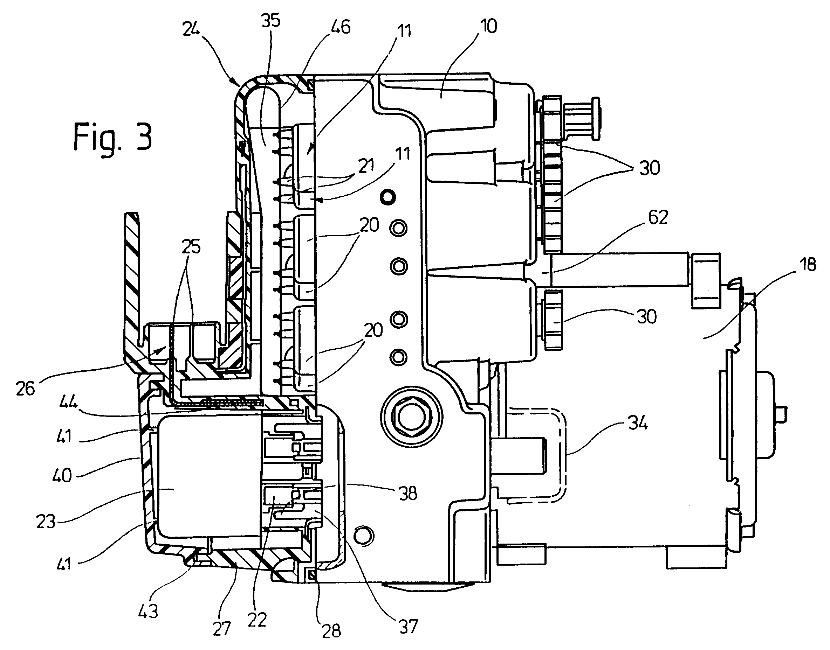

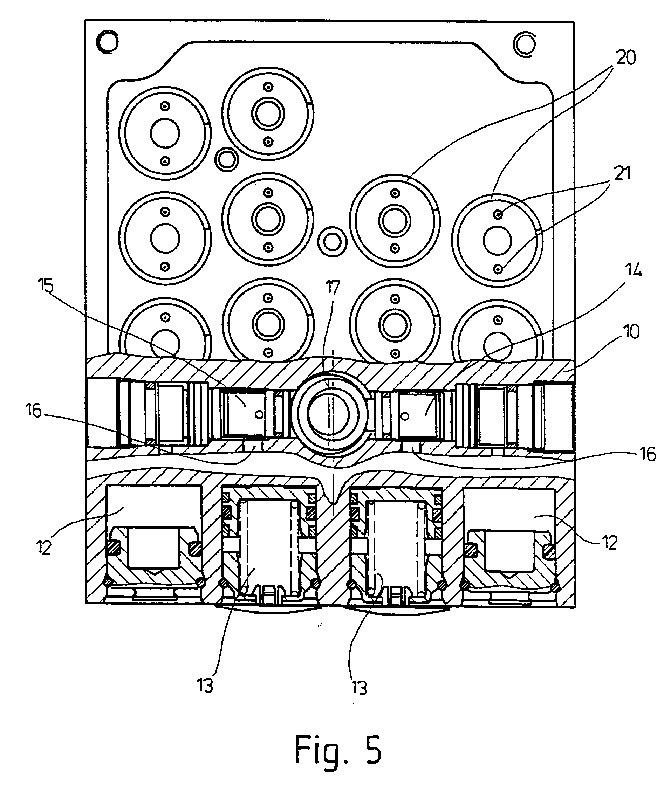

Das in Fig. 1 - 5 in verschiedenen Ansichten dargestellte elektrohydraulische Aggregat zur Druckregelung in Bremsanlagen von Fahrzeugen weist einen Hydraulikblock 10 mit darin befestigten Elektromagnetventilen 11, deren Elektromagnete mit 20 bezeichnet sind, Fluidkammern (Fig. 5), wie Dämpferkammern 12 und Speicherkammern 13, zwei Fluidpumpen 14,15 sowie die Elektromagnetventile, die Fluidhammern und die Fluidpumpen miteinander und mit Hydraulikanschlüssen 19 des Aggregats verbindende Fluidkanäle 16 auf. Wie aus Fig. 5 ersichtlich ist, werden die Fluidpumpen 14,15 von einem Exzenter 17 zur Hubbewegung angetrieben. Der Exzenter 17 sitzt auf der Getriebeabtriebswelle eines Elektromotors 18. Wie in Fig. 1 und 2 zu sehen ist, ist der Elektromotor 18 auf derjenigen Seite des Hydraulikblocks 10 aufgesetzt und dort befestigt, an welcher sich auch die Hydraulikanschlüsse 19 befinden. In Fig. 3 sind die Hydraulikanschlüsse 19 mit Schutzkappen 30 abgedeckt, die in die Hydraulikanschlüsse 19 eingeschraubt werden. Auf der gegenüberliegenden Seite des Hydraulikblocks 10 stehen die Elektromagnete 20 der Elektromagnetventile 11, im folgenden kurz Magnetventile 11 genannt, aus dem Hydraulikblock 10 hervor, deren elektrische Anschlüsse mit 21 bezeichnet sind. Die Elektromagnete 20 sind zusammen mit ebenfalls auf dieser Seite des Hydraulikblocks 10 angeordneten, noch zu beschreibenden Relais 23 für die Steuerung der Magnetventile 11 und des Elektromotors 18 durch eine insgesamt mit 24 bezeichnete Abdeckung geschützt, an der eine Vielzahl von Steckern 25 zu einer leistenartigen Steckergruppe 26 zusammengefaßt ist. Über diese Steckerleiste 26 wird eine lösbare elektrische Verbindung, z.B. durch einen Flachstecker, des Aggregats zum Fahrzeugkabelbaum hergestellt.

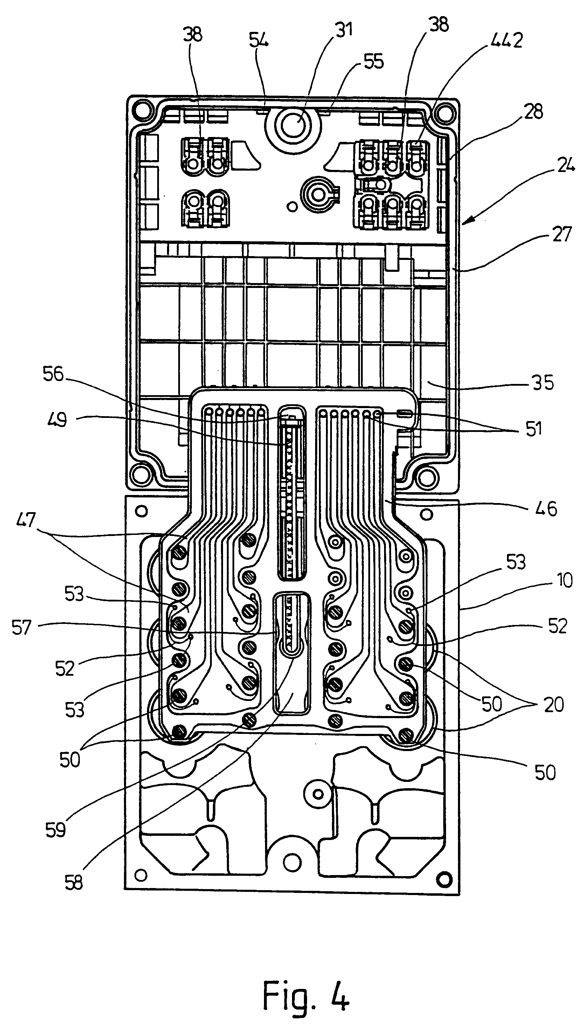

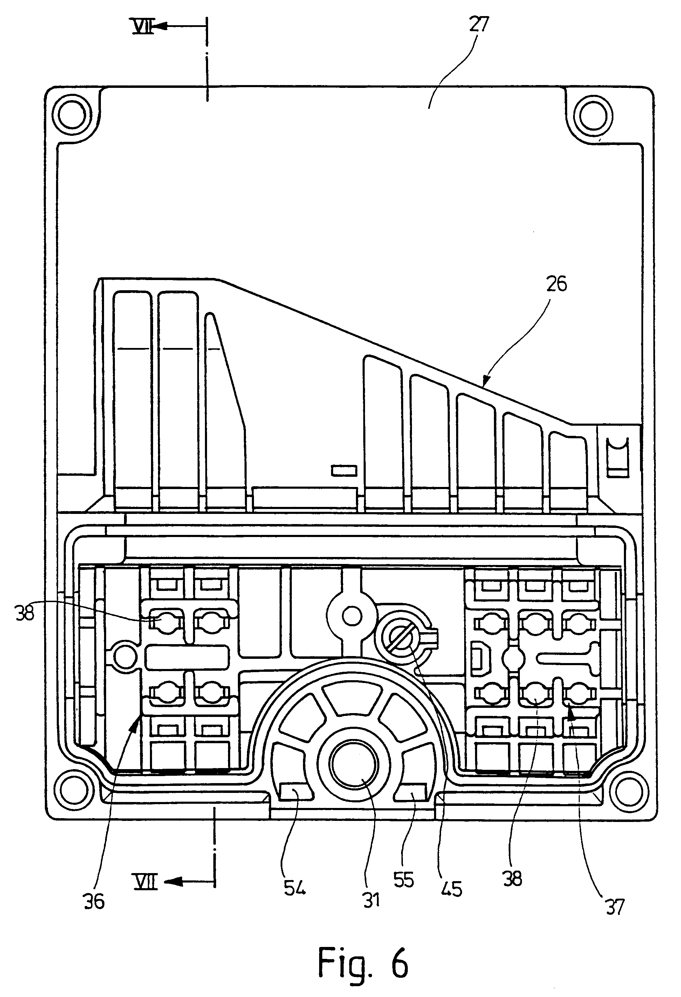

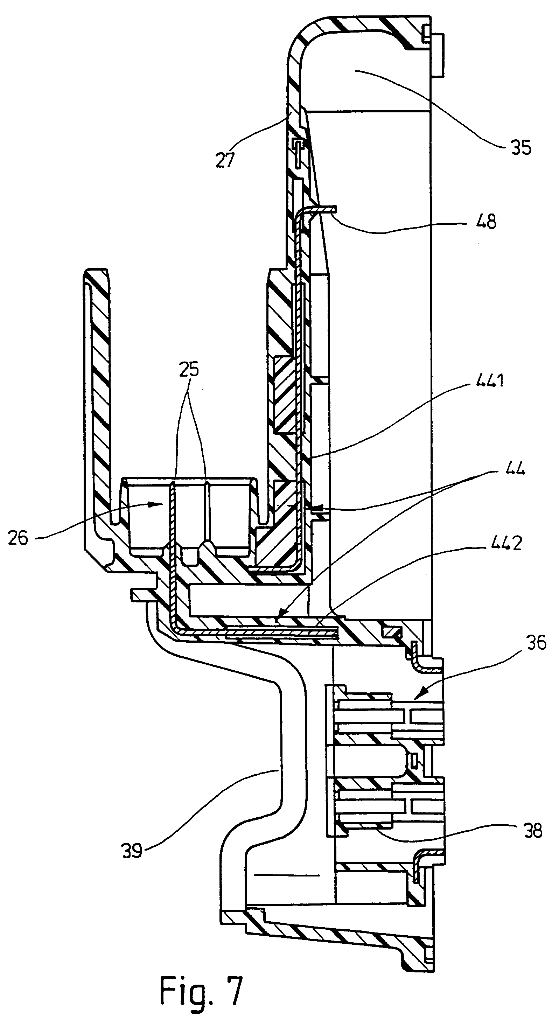

Die Abdeckung 24 ist zweigeteilt und setzt sich aus einem Kunststoff-Stecksockel 27 und einer auf den Stecksockel 27 aufsetzbaren Abdeckhaube 40 zusammen, die ebenfalls aus Kunststoff gefertigt ist. Der Stecksockel 27 sitzt bündig auf dem Hydraulikblock 10 auf, wobei er gegenüber dem Hydraulikblock 10 durch einen umlaufenden Dichtring 28 (Fig. 4) abgedichtet ist. Der Dichtring 28 weist dabei eine der Umrißlinie des Stecksockels 27 angepaßte Kontur auf. Der Stecksockel 27 ist an dem Hydraulikblock 10 mittels vier Gewindeschrauben 29 (Fig. 1) befestigt. Die Gewindeschrauben 29 sind an den vier Ecken des Stecksockels 27 durch entsprechende Bohrlöcher im Stecksockel 27 hindurchgesteckt und in den Hydraulikblock 10 eingeschraubt. Zur Fixierung des Stecksockels 27 dient ein Stehbolzen 32, der in der Aggregatmitte in den Hydraulikblock 10 einschraubbar ist und mit weiteren Stehbolzen der Aggregataufhängung im Fahrzeug dient. Der Stehbolzen 32 wird dabei durch eine im Stecksockel 27 gehaltene Distanzbuchse 31 hindurchgesteckt und mittels eines angeformten Sechskants 33 in den Hydraulikblock 10 eingeschraubt. Auf dem vorstehenden Ende des Stehbolzens 32 ist ein Gummidämpfer 34 aufgesetzt, der mit weiteren Gummidämpfern 34 der Aggregataufhängung dient. Im Bereich der Elektromagnete 20 weist der Stecksockel 27 einen Hohlraum 35 auf, der so ausgebildet ist, daß der Stecksockel 27 die elektrischen Anschlüsse 21 der Elektromagnete 20 mit Abstand überdeckt. Unterhalb des Hohlraums 35 sind symmetrisch zur Achse links und rechts von dem Stehbolzen 32 zwei Steckaufnahmen 36,37 (Fig. 3 und 6) für die beiden Relais 23 ausgebildet, von denen nur das Relais 23 für die Magnetventilsteuerung in Fig. 3 dargestellt ist. Die Steckaufnahmen 36,37 für Motor- und Magnetventilrelais 23 sind mit einer Mehrzahl von Steckbuchsen 38 versehen, in welchen die in Form von Anschlußstiften 22 ausgebildeten elektrischen Anschlüsse der Relais 23 eingesteckt werden. Die Steckbuchsen 38 sind - wie noch beschrieben werden wird - mit den Steckern 25 und den Elektromagneten 20 bzw. dem Elektromotor 18 verbunden. Durch diese Ausbildung der Steckaufnahmen 36,37 wird durch einfaches Einstecken der Relais 23 gleichzeitig die mechanische Halterung und elektrische Kontaktierung hergestellt. Wie aus Fig. 7 hervorgeht, ist der Stecksockel 27 im Bereich jeder Steckaufnahme 36,37 mit Ausnehmungen 39 versehen, von denen in Fig. 7 nur die der Steckaufnahmen 36 zugeordnete Ausnehmung 39 zu sehen ist. Diese Ausnehmungen 39 dienen zur erleichterten Demontage der beiden Relais 23, die durch die Ausnehmungen 39 besser gegriffen und aus den Steckaufnahmen 36,37 herausgezogen werden können. Die unterhalb der Steckerleiste 26 auf den Stecksockel 27 aufzusetzende Abdeckhaube 40 ist so ausgebildet, daß sie die beiden Relais 23 völlig umschließt und mit einem am Haubengrund angeordneten Steg 41 (Fig. 3) an der Stirnseite der Relais 23 anliegt. Dadurch können Schwingungen des Aggregats im Fahrzeug nicht zu Lockerungen der Relais 23 in den Steckaufnahmen 36,37 und zur Kontaktbeschädigung führen. Die Abdeckhaube 40 ist mittels einer mittigen Befestigungsschraube 42 (Fig. 2) am Stecksockel 27 verschraubt. Ein Labyrinth 43, dem ggf. noch ein Dichtring hinzugefügt werden kann, dient zur staub- und feuchtigkeitsdichten Abdeckung der Relais 23.

Die Stecker 25 der Steckerleiste 26 mit ihren Steckeranschlüssen, die Steckbuchsen 38 in den Steckaufnahmen 36,37 sowie elektrische Verbindungsleitungen untereinander und zu den Elektromagneten 20 und dem Elektromotor 18 werden durch ein Stanzgitter 44 realisiert, das in den aus Kunststoff gespritzten Stecksockel 27 komplett eingebettet ist. Das Stanzgitter 44 ist - wie in Fig. 7 am deutlichsten zu erkennen ist - in zwei Teilgitter 441,442 unterteilt, die jeweils getrennt hergestellt und im Stecksockel 27 vor dem Umspritzen miteinander zusammengesetzt werden. Das erste Teilgitter 441 ist dabei in dem den Hohlraum 35 überdeckenden Stecksockelbereich und das zweite Teilgitter 442 in dem von der Abdeckhaube 40 überdeckten Stecksockelbereich integriert.

An beiden Teilgittern 441,442 ist ein Teil der Stecker 25 ausgebildet. Masseseitig ist das Stanzgitter 44 am Hydraulikblock 10 festgelegt, wozu das untere Teilgitter 442 über eine hier nicht zu sehende Schlaufe mit einer in den Hydraulikblock 10 eingeschraubten Masseschraube 45 verbunden ist.

Im oberen Teilgitter 442 ist die elektrische Verbindung zu den Elektromagneten 20 der Magnetventile 11 und dem Elektromotor 18 hergestellt. Die erstgenannte Verbindung erfolgt über eine flexible Kontaktfolie 46 mit einer Vielzahl von darauf befindlichen Leiterbahnen 47 (Fig. 4) und die letztere durch eine vom Teilgitter 441 in den Hohlraum 35 hineinragende Anschlußfahne 48 mit Anschlußlitze 49. An beiden Enden der Leiterbahnen 47 auf der Kontakfolie 46 sind Lötpunkte 50,51 vorgesehen. An den Lötpunkten 50 sind die elektrischen Anschlüsse 21 der Elektromagnete 20 verlötet, während die Lötpunkte 51 die Verbindungen der Leiterbahnen 47 zu den elektrischen Verbindungsstegen im Stanzgitter 44 herstellen. Zwecks Ausgleichung von unterschiedlichen Toleranzlagen der elektrischen Anschlüsse 21 der Elektromagnete 20 sind um die die Lötpunkte 50 tragenden Leiterbahnenden im Abstand von den Leiterbahnen 47 Schnitte 52 in die Kontaktfolie 46 gelegt, die an den Schnittenden in je einer Lochung 53 enden. Durch die Schnitte 52 können sich die Leiterbahnenenden geringfügig aus der Ebene der Kontaktfolie 46 herausheben und so Toleranzen im Niveau der elektrischen Anschlüsse 21 der Elektromagnete 20 ausgleichen. Die Lochungen 53 verhindern ein Weiterreißen der Schnitte 52. Die Kontaktfolie 46 wird zunächst mit ihren Lötpunkten 50 mit den elektrischen Anschlüssen 21 der Elektromagnete 20 verbunden. Dann wird der Stecksockel 27 in einem Schwenkwinkel von ca. 120° an die obere Kante des Hydraulikblocks 10 angesetzt, so daß der über den Hydraulikblock 10 vorstehende Teil der Kontaktfolie 46 in etwa planer Ausrichtung an der Innenseite des Stecksockels 27 satt anliegt (vergl. Fig. 4). Nunmehr werden die Leiterbahnen 47 der Kontakfolie 46 in den Lötpunkten 51 mit dem Stanzgitter 44 elektrisch leitend verbunden. Die aufgeklappte Lage des Stecksockels 27 erlaubt einerseits ein bequemes Löten der Kontaktpunkte 51 und garantiert andererseits ein sauberes Anliegen der Leiterbahnen 47 am Stecksockel 27 beim Lötvorgang. Anschließend wird der Stecksockel 27 durch Aufklappen auf den Hydraulikblock 10 gefügt, wobei sich die Kontaktfolie 46 an der Innenwand des den Hohlraum 35 abdeckenden Stecksockelbereichs abrollt, wie dies in Fig. 2 und 3 dargestellt ist. Dabei wird die Kontaktfolie 46 in eine definierte Winkellage gezwungen, in welcher das Entstehen von Scheuerstellen beim Schwingen des Aggregats verhindert wird. Die Fixierung des bündig auf dem Hydraulikblock 10 aufliegenden Stecksockels 27 erfolgt mittels des durch die Distanzbuchse 31 hindurchgesteckten Stehbolzens 32, die anschließende Befestigung durch Einschrauben der vier Gewindeschrauben 29. Wie bereits erwähnt, ist der Stecksockel 27 gegenüber dem Hydraulikblock 10 durch einen umlaufenden Dichtring 28 abgedichtet. Zur Be- und Entlüftung des Hohlraums 35 und zum Abführen von sich dort evtl. ansammelndem Kondenswasser ist jeweils beidseitig der Distanzbuchse 31 ein Schlitz 54,55 am tiefsten Punkt des Stecksockels 27 eingebracht. Durch 90°-Anordnung der Schlitze 54,55 wird ein direktes Einspritzen von Wasser verhindert.

Die Kontaktfolie 46 hat mittig zwei in Längsrichtung hintereinander angeordnete Aussparungen 56,57 (Fig. 4). Diese Aussparungen 56,57 dienen - wie aus Fig. 2 ersichtlich ist - zum Hindurchführen der Anschlußlitze 49 für den Elektromotor 18 und des einen Endes eines für den elektrischen Motoranschluß vorgesehenen Zwischensteckers 58. Wie in Fig. 2 und 4 zu erkennen ist, weist der aus Kunststoff gefertigte Zwischenstecker 58 ein Rohr 59 auf, das durch eine Bohrung 60 im Hydraulikblock 10 bis auf dessen den Elektromotor 18 tragenden Seite hindurchgesteckt ist. An dem auf dieser Seite herausragenden Ende des Rohrs 59 ist eine Kontaktbuchse 61 befestigt, die an dem einen Ende der durch das Rohr 59 hindurchgezogenen Anschlußlitze 49 angelötet oder angecrimpt ist. Das andere Ende der Anschlußlitze 49 ist an der Anschlußfahne 48 des Stanzgitters 44 angelötet und tritt beim Schwenken des Stecksockels 27 auf den Hydraulikblock 10 durch die Aussparung 56 in der Kontaktfolie 46 hindurch. Das Rohr 59 trägt auf seinem Außenumfang ein Tannenbaumprofil, das den Zwischenstecker 58 nach Hineindrücken des Rohrs 59 in die Bohrung 60 im Hydraulikblock 10 verklemmt. Auf die Kontaktbuchse 61 ist ein Steckerteil 62 aufgeschoben, durch welches der elektrische Anschluß zum Elektromotor 18 hergestellt wird.

## Patentansprüche

1. Elektrohydraulisches Aggregat zur Druckregelung in Bremsanlagen von Fahrzeugen mit einem Hydraulikblock (10), der Fluid-Magnetventile (11) mit auf der einen Seite des Hydraulikblocks (10) vorstehenden Elektromagneten (20), Fluidpumpen (14,15), Fluidkammern und entsprechende Fluidkanäle enthält, mit einem an dem Hydraulikblock (10) angebauten Elektromotor (18) zum Antreiben der Fluidpumpen, der auf der gegenüberliegenden Seite des Hydraulikblocks (10) befestigt ist, mit zwei elektrischen Relais für Magnetventile und Elektromotor (18), die an der die Elektromagnete tragenden Seite des Hydraulikblocks (10) angeordnet sind, und mit einer Elektromagnete und Relais schützenden Abdeckung (24), an der mindestens eine von außen zugängliche Steckergruppe (26) mit einer Vielzahl von Steckern zum Aufstecken eines elektrischen Anschlußsteckers angeordnet ist, deren Steckeranschlüsse mit den elektrischen Anschlüssen der Elektromagnete und Relais sowie des Elektromotors verbunden sind, mit einem Stecksockel (27) der bündig auf der einen Seite des Hydraulikblocks (10) aufsitzt und im Bereich der Elektromagnete (20) einen diese aufnehmenden Hohlraum (35) aufweist, dadurch gekennzeichnet, daß die Abdeckung (24) in einen die Steckergruppe (26) mit Steckern (25) und deren Steckeranschlüsse enthaltenden Stecksockel (27) und eine auf den Stecksockel (27) aufsetzbare Abdeckhaube (40) unterteilt ist, daß die elektrische Verbindung zwischen den Steckeranschlüssen und den elektrischen Anschlüssen (21) der Elektromagnete (20) durch eine flexible Kontaktfolie (46) hergestellt ist, daß der Stecksockel (27) zwei unterhalb des Hohlraums (35) mit Abstand zur Stecksockelmitte, vorzugsweise symmetrisch, angeordnete Steckaufnahmen (36,37) für je ein Relais (23) aufweist, die als elektrisch kontaktierte Steckbuchsen (38) für Anschlußstifte (22) der Relais (23) ausgebildet sind, und daß die am Stecksockel (27) befestigtbare Abdeckhaube (40) so ausgebildet ist, daß sie die beiden in die Steckaufnahmen (36,37) eingesteckten Relais (23) überdeckt und gegen Axialverschiebung sichert.

2. Aggregat nach Anspruch 1, dadurch gekennzeichnet, daß der Stecksockel (27) an seinen seitlichen Außenflächen im Bereich der Steckaufnahme (36,37) je eine Ausnehmung (39) aufweist, die so ausgebildet ist, daß die in den Steckaufnahmen (36,37) eingesteckten Relais (23) hintergriffen werden können.

3. Aggregat nach Anspruch 1 oder 2, dadurch gekennzeichnet, daß die Abdeckhaube (40) gegenüber dem Stecksockel (27) durch ein Labyrinth (43) abgedichtet und mittels einer mittig durch die Abdeckhaube (40) hindurchgeführten Schraube (42) an dem Stecksockel (27) befestigt ist.

4. Aggregat nach einem der Ansprüche 1 - 3, dadurch gekennzeichnet, daß der Stecksockel (27) gegenüber dem Hydraulikblock (10) durch einen umlaufenden Dichtring (28) mit einer den Umrißlinien des Stecksockels (27) angepaßten Kontur abgedichtet und mittels Gewindeschrauben (29) am Hydraulikblock (10) befestigt ist und vorzugsweise daß ein im Hydraulikblock (10) verschraubbarer Stehbolzen (32) für die Aggregataufhängung im Fahrzeug, der durch eine mittig im stecksockel (27) angeordnete Distanzbuchse (31) hindurchtritt, als Fixierung für den Stecksockel (27) dient.

5. Aggregat nach Anspruch 4, dadurch gekennzeichnet, daß auf beiden Seiten der Distanzbuchse (31) für den Stehbolzen (32) jeweils am tiefsten Punkt des Stecksockels (27) Schlitze (54,55) für die Be- und Entlüftung sowie für den Leckageablauf vorgesehen sind.

6. Aggregat nach einem der Ansprüche 1 - 5, dadurch gekennzeichnet, daß die Stecker (25) mit Steckeranschlüssen und die Steckbuchsen (38) mit ihren elektrischen Anschlüssen sowie der in dem Stecksockel (27) verlaufende Teil der elektrischen Verbindungsleitungen zu Magnetventilen (11) und Elektromotor (18) von einem Stanzgitter (44) gebildet sind, das in dem aus Kunststoff hergestellten Stecksockel (27) eingebettet ist.

7. Aggregat nach Anspruch 6, dadurch gekennzeichnet, daß das Stanzgitter (44) aus zwei getrennt hergestellten, im Stecksockel (47) eingespritzten Teilgittern (441,442) zusammengesetzt ist, von denen das erste Teilgitter (441) in dem den Hohlraum (35) überdeckenden Stecksockelbereich und das zweite Teilgitter (442) in dem von der Abdeckhaube (40) überdeckten Stecksockelbereich integriert ist, und daß an beiden Teilgittern (441,442) ein Teil der Stecker (25) der Steckergruppe (26) ausgebildet ist.

8. Aggregat nach Anspruch 7, dadurch gekennzeichnet, daß der Massepol des Stanzgitters (44) von einer in den Hydraulikblock (10) eingeschraubten Masseschraube (45) gebildet ist, an der das Stanzgitter (44) mittels einer Schlaufe angeschlossen ist.

9. Aggregat nach Anspruch 7 oder 8, dadurch gekennzeichnet, daß die flexible Kontaktfolie (46) an dem ersten Teilgitter (441) angelötet ist und nach Aufsetzen des Stecksockels (27) auf dem Hydraulikblock (10) um 180° gebogen und in ihrem Krümmungsbereich längs eines Teils der Hohlraumbegrenzung des Stecksockels (27) definiert geführt ist.

10. Aggregat nach einem der Ansprüche 1 - 9, dadurch gekennzeichnet, daß die Kontaktfolie (46) Leiterbahnen (47) mit Lötendpunkten (50) zum Anlöten der Elektromagnetanschlüsse (21) aufweist und daß um mindestens einen Teil der die Lötpunkte (50) tragenden Leiterbahnenden mit Abstand von den Leiterbahnen (47) Schnitte (52) in die Kontaktfolie (46) gelegt sind, die an den Schnittenden in je einer Lochung (53) in der Kontaktfolie (46) münden.

11. Aggregat nach einem der Ansprüche 6 - 10, dadurch gekennzeichnet, daß die Kontaktfolie (46) mindestens einen mittig angeordneten langgestreckten Schlitz (54) aufweist, durch welchen eine Anschlußlitze (49) für den Elektromotor (18) hindurchgeführt ist, die einerseits an einer vom Stanzgitter (44) in den Hohlraum (35) hineinragenden Anschlußfahne (48) und andererseits an einer Kontaktbuchse (61) für die Elektromotorkontaktierung angelötet oder angecrimpt ist.

12. Aggregat nach Anspruch 11, dadurch gekennzeichnet, daß die Kontaktbuchse (61) an einem Zwischenstecker (58) aus Kunststoff gehalten ist, der ein die Anschlußlitze (49) teilweise aufnehmendes Rohr (59) aufweist, an dessen freiem Ende die Kontaktbuchse (61) befestigt ist, und daß der Zwischenstecker (58) von der die Elektromagneten (20) der Magnetventile (11) tragenden Seite des Hydraulikblocks (10) her mit seinem Rohr (59) durch eine Bohrung (60) im Hydraulikblock (10) hindurchgeführt ist.

13. Aggregat nach Anspruch 12, dadurch gekennzeichnet, daß der Zwischenstecker (58) am Hydraulikblock (10) verrastet ist.

14. Aggregat nach Anspruch 13, dadurch gekennzeichnet, daß die Verrastung durch ein an dem Rohr (59) ausgebildetes Tannenbaumprofil bewirkt wird, mit dem das Rohr (59) in die Bohrung (60) im Hydraulikblock (10) hineingedrückt wird.

15. Aggregat nach einem der Ansprüche 11 - 14, dadurch gekennzeichnet, daß die Kontaktbuchse (61) zum Ein- oder Aufschieben eines mit dem Elektromotoranschluß verbundenen Steckerteils (62) ausgebildet ist.

## Claims

1. Electrohydraulic unit for pressure regulation in brake systems of vehicles, with a hydraulic block (10) which contains solenoid fluid valves (11) with electromagnets (20) projecting from one side of the hydraulic block (10), fluid pumps (14, 15), fluid chambers and corresponding fluid passages, with an electric motor (18) which is mounted on the hydraulic block (10), serves the purpose of driving the fluid pumps and is secured on the opposite side of the hydraulic block (10), with two electric relays for the solenoid valves and the electric motor (18), which are arranged on that side of the hydraulic block (10) which carries the electromagnets, and with a cover (24) which protects the electromagnets and the relays and on which is arranged at least one externally accessible plug group (26) comprising a multiplicity of plugs for pushing on an electric connector, the plug connections of which plugs are connected to the electrical connections of the electromagnets and relays and of the electric motor, with a plug base (27) which rests flush on one side of the hydraulic block (10) and, in the region of the electromagnets (20) has a cavity (35) which accommodates the latter, characterized in that the cover (24) is divided into a plug base (27), which contains the plug group (26) with the plugs (25) and their plug connections, and a covering hood (40) which can be placed on the plug base (27), in that the electrical connection between the plug connections and the electrical connections (21) of the electromagnets (20) is established by a flexible contact foil (46), in that the plug base (27) has two plug-in receptacles (36, 37), which are arranged, preferably symmetrically, underneath the cavity (35) at a distance from the centre of the plug base and are intended for respective relays (23) designed as electrically contacted sockets (38) for connection pins (22) of the relays (23), and in that the covering hood (40), which can be secured on the plug base (27), is designed in such a way that it covers the two relays (23) inserted into the plug-in receptacles (36, 37) and secures them against axial displacement.

2. Unit according to Claim 1, characterized in that, in the region of the plug-in receptacle (36, 37), the plug base (27) has on each of its lateral outer surfaces a recess (39) which is designed in such a way that it is possible to grip behind the relays (23) plugged into the plug-in receptacles (36, 37).

3. Unit according to Claim 1 or 2, characterized in that the covering hood (40) is sealed off relative to the plug base (27) by a labyrinth (43) and is fastened to the plug base (27) by means of a screw (42) passed centrally through the covering hood (40).

4. Unit according to one of Claims 1 - 3, characterized in that the plug base (27) is sealed off relative to the hydraulic block (10) by an encircling sealing ring (28) with a contour matched to the outline of the plug base (27) and is fastened to the hydraulic block (10) by means of threaded screws (29), and preferably in that a stud bolt (32) which can be screwed into the hydraulic block (10) and is intended for the suspension of the unit in the vehicle, the said stud bolt passing through a distance sleeve (31) arranged centrally in the plug base (27), serves as a fixing for the plug base (27).

5. Unit according to Claim 4, characterized in that slots (54, 55) for allowing air in and out and for allowing leaked fluid to drain away are each provided at the lowest point of the plug base (27) on both sides of the distance sleeve (31) for the stud bolt (32).

6. Unit according to one of Claims 1 - 5, characterized in that the plugs (25) with the plug connections and the sockets (38) with their electrical connections and that part of the electrical connecting lines to the solenoid valves (11) and the electric motor (18) which runs in the plug base (27) are formed by a stamped screen (44) which is embedded in the plug base (27), which is produced from plastic.

7. Unit according to Claim 6, characterized in that the stamped screen (44) is made up of two separately produced part-screens (441, 442) which are moulded into the plug base (27) and of which the first part-screen (441) is integrated into the plug-base region covering the cavity (35) and the second part-screen (442) is integrated into the plug-base region covered by the covering hood (40), and in that some of the plugs (25) of the plug group (26) are formed on the two part-screens (441, 442).

8. Unit according to Claim 7, characterized in that the earth pole of the stamped screen (44) is formed by an earth screw (45) which is screwed into the hydraulic block (10) and to which the stamped screen (44) is connected by means of a loop.

9. Unit according to Claim 7 or 8, characterized in that the flexible contact foil (46) is soldered to the first part-screen (441) and, after the plug base (27) has been placed on the hydraulic block (10), is bent through 180° and, in its bent region, is guided in a defined manner along part of the boundary of the cavity of the plug base (27).

10. Unit according to one of Claims 1 - 9, characterized in that the contact foil (46) has conductor tracks (47) with soldering end points (50) for soldering on the electromagnet connections (21) and in that cuts (52) are placed at a distance from the conductor tracks (47) in the contact foil (46) around at least some of the conductor-track ends carrying the soldering points (50), the said cuts opening at their ends into respective holes (53) in the contact foil (46).

11. Unit according to one of Claims 6 - 10, characterized in that the contact foil (46) has at least one centrally arranged elongate slot (54), through which is passed a connecting braid (49) for the electric motor (18), the said braid being soldered or crimped on the one hand to a terminal lug (48) projecting from the stamped screen (44) into the cavity (35) and on the other hand to a female contact connector (61) for the contacting of the electric motor.

12. Unit according to Claim 11, characterized in that the female contact connector (61) is held on an adaptor plug (58) made of plastic which has a tube (59) which partially accommodates the connecting braid (49) and on the free end of which the female contact connector (61) is secured, and in that the tube (59) of the adaptor plug (58) is passed through a hole (60) in the hydraulic block (10) from that side of the hydraulic block (10) which carries the electromagnets (20) of the solenoid valves (11).

13. Unit according to Claim 12, characterized in that the adaptor plug (58) is latched to the hydraulic block (10).

14. Unit according to Claim 13, characterized in that the latching is achieved by means of a fir tree profile which is formed on the tube (59) and with which the tube (59) is pressed into the hole (60) in the hydraulic block (10).

15. Unit according to one of Claims 11 - 14, characterized in that the female contact connector (61) is designed to allow a plug part (62) connected to the electric motor connection to be pushed in or on.

## Revendications

1. Unité électrohydraulique pour la régulation de la pression dans des systèmes ou installations de freins de véhicules comprenant un bloc hydraulique (10) pour des électrovannes à liquide (11), des électroaimants (20) étant en saillie d'un côté du bloc hydraulique (10), des pompes à liquide (14, 15), des chambres à liquide et des canaux à liquide correspondants, avec un moteur hydraulique (18) fixé au bloc hydraulique (10) pour entraîner les pompes, ce moteur étant fixé sur le côté opposé du bloc hydraulique (10), avec deux relais électriques pour les électrovannes et le moteur hydraulique (18), prévus sur le côté du bloc hydraulique (10) portant les électroaimants, ainsi qu'un capot (24) protégeant les électroaimants et les relais, et qui comporte un groupe de broches accessible de l'extérieur, avec un grand nombre de broches pour enbrocher un connecteur électrique dont les branchements sont reliés aux branchements électriques des électroaimants et des retais ainsi que du moteur électrique, un socle à broches (27) fixé à fleur sur un côté du bloc hydraulique 10 en ayant au niveau des électroaimants (20) une cavité (35) les recevant, caractérisée en ce que le capot (24) est subdivisé en un socle à broches (27) muni du groupe de broches (26) avec les broches (25) et leurs branchements ainsi qu'un capot (40) qui se monte sur le socle (27), la liaison électrique entre les branchements des broches et les branchements électriques (21) des électroaimants (20) étant assurée par des feuilles de contact souples (46), le socle à broches (27) ayant deux logements d'enfichage (36, 37) pour chaque fois un relais (23), en dessous de la cavité (35), à une certaine distance du milieu du socle à broches, suivant une disposition de préférence symétrique, ces logements étant réalisés comme des douilles de contact électrique (38) pour les broches de branchement (22) des relais (23), et le capot (40) fixé au socle à broches (27) étant réalisé pour recouvrir les deux relais (23) engagés dans les deux logements à broches (36, 37) et les bloquer contre tout mouvement axial.

2. Unité selon la revendication 1, caractérisée en ce que le socle à broches (27) comporte sur ses surfaces extérieures latérales, au niveau des logements d'enfichage (36, 37), chaque fois une cavité (39) réalisée pour que les relais (23) engagés dans les logements à broches (36, 37) puissent être pris par derrière.

3. Unité selon la revendication 1 ou 2, caractérisée en ce que le capot (40) est rendu étanche par rapport au socle à broches (27), par un joint en labyrinthe (43), et est fixé au socle (27) à l'aide d'une vis (42) traversant le capot (40) en son milieu.

4. Unité selon l'une des revendications 1 à 3, caractérisée en ce que le socle à broches (27) est monté de manière étanche sur le bloc hydraulique (10) par un joint d'étanchéité périphérique (28) dont le contour est adapté au contour du socle (27) et fixé au bloc hydraulique (10) par des vis (29), et de préférence un goujon fileté (32) vissé dans le bloc hydraulique (30) est prévu pour suspendre l'unité dans le véhicule, en étant traversé par une douille d'écartement (31) au milieu du socle (27) comme moyen de fixation pour le socle (27).

5. Unité selon la revendication 4, caractérisée en ce que des deux côtés de la douille d'écartement (31) pour le goujon fileté (32), chaque fois au point le plus bas du socle (27), il y a des fentes (54, 55) pour la ventilation et l'aération ainsi que pour les fuites.

6. Unité selon l'une des revendications 1 à 5, caractérisée en ce que les broches (25) sont munies de branchements, et les douilles à broches (38) avec leurs branchements électriques ainsi que la partie des lignes électriques de liaison qui passent dans le socle à broches (27), allant vers les électroaimants (11) et le moteur électrique (18), sont constituées par une grille estampée (44) intégrée dans le socle à broches (27) fabriqué en matière plastique.

7. Unité selon la revendication 6, caractérisée en ce que la grille estampée (44) se compose de deux parties de grille (441, 442) fabriquées séparément et noyées par injection dans le socle à broches (47) pour y être réunies, la première partie de grille (441) étant intégrée dans la zone du socle à broches recouvrant la cavité (35) et la seconde partie de grille (442) étant intégrée dans la zone du socle à broches recouverte par le capot (40), et en ce quen sur les deux parties de grille (441, 442), est réalisée une partie des broches (25) du groupe (26).

8. Unité selon la revendication 7, caractérisée en ce que le pôle de masse de la grille estampée (44) est formé par une vis de masse (45) vissée dans le bloc hydraulique (10), et la grille estampée (44) est reliée à cette vis par une boucle.

9. Unité selon la revendication 7 ou 8, caractérisée en ce que la feuille de contact souple (46) est soudée à la première partie de grille (441) et est recourbée à 180° après mise en place du socle à broches (27) sur le bloc hydraulique (10), et cette feuille est guidée dans sa zone de courbure, le long d'une partie de la paroi de la cavité du socle à broches (27) suivant un guidage déterminé.

10. Unité selon l'une des revendications 1 à 9, caractérisée en ce que la feuille de contact (46) comporte des chemins conducteurs (47) avec des points de soudure (50) pour souder des branchements (21) des électroaimants et en ce qu'autour d'au moins une partie des extrémités des chemins conducteurs munis des points de soudure (50), à distance des chemins conducteurs (47), il y a des entailles (52) dans la feuille de contact (46), et ces entailles se terminent, à leurs extrémités, chaque fois par un orifice (53) dans la feuille de contact (46).

11. Unité selon l'une des revendications 6 à 10, caractérisée en ce que la feuille de contact (46) comporte au moins une fente (54) allongée, prévue en son milieu, et qui est traversée par un cordon de raccordement (49) pour le moteur électrique (18), une extrémité du cordon étant soudée ou sertie à une patte de branchement (48) de la grille estampée (44) pénétrant dans la cavité (35) et l'autre extrémité à un pont de contact (61) pour le branchement électrique du moteur.

12. Unité selon la revendication 11, caractérisée en ce que la douille de contact (61) est maintenue à un connecteur intermédiaire (58) en matière plastique qui comporte un tube (59) entourant partiellement le cordon de branchement (49) et dont l'extrémité libre porte solidairement la douille de contact (61), et en ce que le connecteur intermédiaire (58) du côté du bloc hydraulique (10) portant l'électroaimant (20) et l'électrovanne (11), traverse ici le bloc hydraulique (10) par son tube (59) à travers un perçage (60).

13. Unité selon la revendication 12, caractérisée en ce que le connecteur intermédiaire (58) est accroché au bloc hydraulique (10).

14. Unité selon la revendication 13, caractérisée en ce que l'accrochage est réalisé par un profil en sapin réalisé sur le tube (59) et par lequel le tube (59) est enfoncé dans le perçage (60) du bloc hydraulique (10).

15. Unité selon l'une des revendications 11 à 14, caractérisée en ce que la douille de contact (61) est réalisée sous la forme d'une partie de connecteur (62) reliée au branchement du moteur électrique pour être engagée ou dégagée.
